(19) Europäisches Patentamt
European Patent Office
Office européen des brevets

(11) **EP 3 732 839 B1**

(12) **FASCICULE DE BREVET EUROPEEN**

(45) Date de publication et mention
de la délivrance du brevet:
**12.02.2025 Bulletin 2025/07**

(21) Numéro de dépôt: **18833981.6**

(22) Date de dépôt: **19.12.2018**

(51) Classification Internationale des Brevets (IPC):
**H04L 25/02** *(2006.01)* **H04L 5/14** *(2006.01)*

(52) Classification Coopérative des Brevets (CPC):
**H04L 25/0232; H04L 25/0256;** H04L 5/1469

(86) Numéro de dépôt international:
**PCT/FR2018/053403**

(87) Numéro de publication internationale:
**WO 2019/129955 (04.07.2019 Gazette 2019/27)**

(54) **PROCÉDÉ D'ESTIMATION DU CANAL ENTRE UN ÉMETTEUR/RÉCEPTEUR ET UN OBJET COMMUNICANT MOBILE**

VERFAHREN ZUR KANALSCHÄTZUNG ZWISCHEN EINEM TRANSCEIVER UND EINEM MOBILEN KOMMUNIKATIONSOBJEKT

METHOD FOR ESTIMATING THE CHANNEL BETWEEN A TRANSCEIVER AND A MOBILE COMMUNICATING OBJECT

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **27.12.2017 FR 1763263**

(43) Date de publication de la demande:
**04.11.2020 Bulletin 2020/45**

(73) Titulaire: **Orange**
**92130 Issy-les-Moulineaux (FR)**

(72) Inventeurs:
• **APELFRÖDJ, Rikke**
**92326 CHÂTILLON CEDEX (FR)**
• **STERNAD, Mikael**
**92326 CHÂTILLON CEDEX (FR)**

(56) Documents cités:
**US-A1- 2007 064 840 US-A1- 2016 344 445**

• **BJORSELL JOACHIM ET AL: "Predictor antennas in action", 2017 IEEE 28TH ANNUAL INTERNATIONAL SYMPOSIUM ON PERSONAL, INDOOR, AND MOBILE RADIO COMMUNICATIONS (PIMRC), IEEE, 8 October 2017 (2017-10-08), pages 1 - 7, XP033321130, ISBN: 978-1-5386-3529-2, [retrieved on 20180214], DOI: 10.1109/PIMRC.2017.8292235**
• **N. SHIMKIN: "7 Optimal Smoothing", PROF. N. SHIMKIN, 1 January 2009 (2009-01-01), XP055502304, Retrieved from the Internet <URL:http://webee.technion.ac.il/people/shimkin/Estimation09/ch7_smoothing.pdf> [retrieved on 20180827]**
• **KASHYAP SALIL ET AL: "Performance analysis of (TDD) massive MIMO with Kalman channel prediction", 2017 IEEE INTERNATIONAL CONFERENCE ON ACOUSTICS, SPEECH AND SIGNAL PROCESSING (ICASSP), IEEE, 5 March 2017 (2017-03-05), pages 3554 - 3558, XP033259073, DOI: 10.1109/ICASSP.2017.7952818**

## Description

Le domaine de l'invention est celui des télécommunications entre entités communicantes en déplacement relatif.

Plus particulièrement, la présente invention concerne les communications radio entre un émetteur/récepteur, tel qu'une station de base, et un véhicule connecté en mouvement.

De manière générale, un signal radio transmis par une antenne d'une entité communicante, dit signal d'antenne, subit des déformations en fonction des conditions de propagation entre un point d'origine défini en sortie de l'antenne d'origine et un point destinataire défini en entrée d'une antenne de l'entité communicante destinataire. Afin de limiter ces déformations, le signal d'antenne est préalablement distordu par application de coefficients de pré-égalisation en fonction des caractéristiques du canal de propagation entre ces deux antennes. Il est donc nécessaire de caractériser ce canal de propagation.

Les estimations d'un canal de communication radio sont généralement obtenues en faisant envoyer, par l'une des entités communicantes, des signaux de référence connus, en enregistrant les signaux reçus par l'autre entité communicante, et en calculant ensuite une estimation du canal à l'instant et pour la fréquence du signal de référence. Par exemple, dans les systèmes de communication utilisant la modulation OFDM (initiales des mots anglais *« Orthogonal Frequency Division Multiplexing »* signifiant « Multiplexage de Fréquences Orthogonales »), les estimations de canal prennent la forme de gains complexes pour chaque sous-porteuse du symbole OFDM sur laquelle les signaux de référence ont été transmis.

Par ailleurs, les communications avec un nombre croissant de véhicules connectés, notamment des véhicules de transport en commun, deviendront très coûteuses en termes de puissance et de largeur de bande, à moins que l'on n'utilise des procédés de communication avancés. Ceux-ci s'appuieront sur des estimations de canal au niveau de l'émetteur (« *Channel State Information at the Transmitter »,* ou CSIT en anglais).

Un premier problème lié aux communications avec des véhicules connectés concerne les pertes de puissance au cours de la pénétration des ondes de l'extérieur vers l'intérieur du véhicule ; en pratique, ces pertes affectent les performances du système de manière importante. Plus précisément, des mesures ont montré que les pertes de pénétration dans un véhicule peuvent être aussi élevées que 25 dB pour un équipement d'usager recevant des ondes de fréquence 2,4 GHz à l'intérieur d'une camionnette. On prévoit des pertes encore plus importantes pour des fréquences plus hautes, par exemple, pour les bandes autour de 3,5 GHz allouées aux systèmes de communication mobiles de nouvelle génération, et pour certains véhicules bien isolés vis-à-vis des ondes électromagnétiques.

Pour résoudre ce problème, il a été proposé (cf. l'article de Y. Sui, A. Papadogiannis et T. Svensson intitulé « The Potential of Moving Relays - A performance Analysis », IEEE Vehicular Technology Conference, Yokohama, mai 2012) d'équiper le véhicule, par exemple un autobus ou un tramway, d'un relais mobile situé à l'extérieur du véhicule. Ce relais mobile utilise une antenne extérieure (typiquement, sur le toit du véhicule), qui est reliée à une antenne située à l'intérieur du véhicule. L'antenne extérieure communique avec la station de base (lien « *backhaut* » en anglais), tandis que l'antenne intérieure communique avec les dispositifs d'utilisateur au moyen d'un réseau de communication local (par exemple un réseau WiFi). L'efficacité d'un tel système de communication repose alors sur les performances et la fiabilité de la liaison entre le relais et la station de base.

Un deuxième problème lié aux communications avec des véhicules connectés est que le canal varie en fonction de la position de l'antenne extérieure. Après qu'une antenne extérieure du véhicule a émis un signal de référence, la station de base émet le signal utile pré-égalisé en conséquence avec un certain délai de traitement $\Delta t$ (de l'ordre de 5 ms dans le cas des systèmes LTE (Long Term Evolution) par exemple) ; or, pendant ce délai, le véhicule s'est déplacé, de sorte que le canal entre la station de base et l'antenne extérieure n'est plus le même que lors de l'émission du signal de référence. On peut néanmoins, dans l'état de l'art, pré-égaliser le signal utile en vue d'un déplacement donné de l'antenne du véhicule, et ce, jusqu'à un certain maximum $\Delta x$ (typiquement, de l'ordre de 0,3 longueurs d'onde de porteuse), sur la base des estimations de canal présente et antérieures et en prenant en compte le phénomène classique d'évanouissement rapide (« *fast-fading* » en anglais), c'est-à-dire les variations de l'amplitude du signal reçu causées par les réflexions des ondes électromagnétiques sur des objets proches du récepteur. Malheureusement, aux vitesses habituelles en zone urbaine (de l'ordre de 50 km/h) et aux fréquences de porteuses habituelles (de l'ordre du GHz), le véhicule se déplace de plus de $\Delta x$ en $\Delta t$.

Pour résoudre ce deuxième problème, il a été proposé un procédé dit « d'Antenne Prédictive » (cf. l'article de M. Sternad, M. Grieger, R. Apelfröjd, T.

Svensson, D. Aronsson et A. Belén Martinez intitulé « Using predictor antennas for long-range prediction of fast fading for moving relays », IEEE Wireless Communications and Networking Conference, Paris, avril 2012), qui utilise à l'extérieur du véhicule une antenne supplémentaire, dite « Antenne Prédictive », placée devant l'antenne extérieure, dite « antenne principale », dédiée aux échanges de données utiles (« *payload* » en anglais) avec la station de base. L'estimation du canal radio en bande de base à la position actuelle de l'Antenne Prédictive permet de prédire les canaux qui concerneront l'antenne principale (placée donc à l'arrière de l'Antenne Prédictive) quand l'antenne principale atteindra la position actuelle de l'Antenne Prédictive.

Le document Bjorsell et al « Predictor antennas in action », 2017 IEEE 28th Annual International Symposium on Personnal, Indoor, and Mobile Radio Communications (PIMRC), IEEE, 8 octobre 2017), présente une évaluation du concept d'antenne prédictive, utilisée à l'extérieur d'un véhicule, qui résout le problème d'évanouissement de canal. Il s'agit d'une antenne supplémentaire en face des autres, dont le canal estimé est une prévision à l'échelle des canaux rencontrés par les antennes arrière lorsqu'elles atteignent cette position. Cette évaluation a été effectuée sur un grand jeu de mesures bruitées de canaux dans un environnement urbain. Le concept d'antenne prédictive permet une extension de l'horizon de prédiction réalisable, par rapport à l'extrapolation par Kalman ou Wiener basées sur des mesures passées du canal. Il représente une précision qui permettrait, par exemple, de multiples entrées - multiples sorties (MIMO) précises dans le sens descendant (« downlink ») pour les véhicules. Les résultats confirment que la distribution de l'erreur « NMSE » (de l'anglais « Normalized Mean Squared Error »), sur tous les environnements de propagation étudiés, est proche de celle obtenue par les modèles basés sur la corrélation et surpasse l'utilisation de mesures passées de canaux.

Le procédé d'Antenne Prédictive permet ainsi, avantageusement, de prédire des estimations de canal sur des durées qui sont un ordre de grandeur supérieur à celles applicables sur la base de l'extrapolation de mesures de canal dans le passé. Ce procédé est donc du plus grand intérêt pour l'application aux véhicules connectés servis par une infrastructure radio avancée.

Pour le traitement du signal, comme pour l'évaluation d'un modèle statistique de l'évolution du canal en temps et en fréquence, ainsi que pour la prédiction de canal, il est fortement souhaitable de disposer d'une série d'échantillons temporels qui soient régulièrement espacés dans le temps. C'est en particulier le cas pour le procédé d'Antenne Prédictive. Or le positionnement des signaux de référence par rapport au temps, à la fréquence et au port d'antenne est déterminé par la norme de communication utilisée, et par des choix de mise en œuvre. Malheureusement, dans nombre de systèmes de communication, ce positionnement n'est pas régulier dans le temps. C'est le cas en particulier pour les transmissions en Duplex par Séparation dans le Temps (« *Time-Division Duplex* », ou TDD en anglais), où l'estimation par la station de base des canaux sur la voie montante (« *uplink* » en anglais) en utilisant des signaux de référence également sur la voie montante est interrompue par des intervalles de transmission sur la voie descendante (« *downlink* » en anglais), pendant lesquels la station de base ne dispose d'aucun signal de référence. Il est donc nécessaire, dans ces systèmes de communication, de mettre en œuvre une méthode d'interpolation pour obtenir, à partir de séries d'estimations de canal espacées de manière irrégulière dans le temps, une série d'estimations de canal situées dans le temps conformément aux besoins, par exemple régulièrement espacées dans le temps.

On connaît diverses méthodes d'interpolation aptes à cela, par exemple celles mettant en œuvre une interpolation polynômiale d'ordre élevé. Cependant, les méthodes connues ont des propriétés sous-optimales et insatisfaisantes quand elles sont appliquées à des estimations de canal présentant des erreurs d'estimation, i.e. à des séries de données « bruitées », comme c'est le cas pour les communications entre une station de base et un véhicule en zone urbaine.

La présente invention concerne donc, selon un premier aspect, un procédé d'estimation de canal, comprenant, pour au moins un écart temporel observé entre deux sous-séquences de mesures de canal, ou d'estimations de canal, constituées de scalaires ou de vecteurs complexes, les étapes suivantes :

-    on effectue une première extrapolation sur la base de mesures de canal ou d'estimations de canal de la sous-séquence précédent ledit écart temporel, en avançant dans le temps,
-    on effectue une seconde extrapolation sur la base de mesures de canal ou d'estimations de canal de la sous-séquence suivant l'écart temporel, en reculant dans le temps, et
-    on calcule une moyenne pondérée desdites mesures ou estimations extrapolées en avant dans le temps et desdites mesures ou estimations extrapolées en arrière dans le temps, pour obtenir des mesures de canal ou des estimations de canal régulièrement espacées dans l'écart temporel.

Ainsi, la présente invention propose, dans le but de réaliser une estimation de canal, un nouveau procédé pour l'interpolation des séries temporelles de mesures de canal ou d'estimations de canal, dans le but de remplir des écarts temporels anormalement longs entre les transmissions de signaux de référence. Le cas vectoriel concerne l'application de l'invention aux multiplets de porteuses, auquel cas l'invention permet de filtrer le bruit pour une pluralité de fréquences.

Grâce à ces dispositions, on peut traiter de manière très efficace les séries de mesures de canal et d'estimations de canal bruitées et irrégulières dans le temps, et en déduire des prédictions de canal sur des durées considérablement supérieures à l'état de l'art.

Le procédé selon l'invention pourra avantageusement être mis en œuvre au cours d'une communication entre, d'une part, une entité réseau, et d'autre part un objet communicant mobile comprenant au moins une Antenne Prédictive et au moins une antenne principale.

Selon des caractéristiques particulières, ladite première extrapolation, ladite seconde extrapolation et ladite moyenne pondérée sont effectuées au moyen d'un lissage de Kalman.

Grâce à ces dispositions, les estimations finales obtenues sont optimales au sens de la minimisation de l'erreur quadratique moyenne (« *Mean Square Error* », ou MSE en anglais) sur les grandeurs estimées. En effet, d'une part, l'extrapolation en avant dans le temps, l'extrapolation en arrière dans le temps, et la moyenne pondérée sont toutes optimales au sens MSE, et d'autre part les deux extrapolations sont statistiquement indépendantes.

Corrélativement, selon un deuxième aspect, l'invention concerne une entité réseau pour l'estimation de canal, comprenant, pour un écart temporel donné entre deux sous-séquences de mesures de canal, ou d'estimations de canal, constituées de scalaires ou de vecteurs complexes, des moyens pour :

- effectuer une première extrapolation sur la base de mesures de canal ou d'estimations de canal de la sous-séquence précédent ledit écart temporel, en avançant dans le temps,
- effectuer une seconde extrapolation sur la base de mesures de canal ou d'estimations de canal de la sous-séquence suivant l'écart temporel, en reculant dans le temps, et
- calculer une moyenne pondérée desdites mesures ou estimations extrapolées en avant dans le temps et desdites mesures ou estimations extrapolées en arrière dans le temps, pour obtenir des mesures de canal ou des estimations de canal régulièrement espacées dans l'écart temporel.

Cette entité réseau pourra avantageusement être hébergée dans un nœud de réseau physique, ou virtuel (dans le « *cloud* »), chargé de gérer les transmissions *downlink,* par exemple dans une station de base d'un réseau de communication cellulaire.

Selon des caractéristiques particulières, ladite entité réseau comprend en outre des moyens pour effectuer ladite première extrapolation, ladite seconde extrapolation et ladite moyenne pondérée au moyen d'un lissage de Kalman.

Les avantages offerts par ces entités réseau sont essentiellement les mêmes que ceux offerts par les procédés corrélatifs succinctement exposés ci-dessus.

On notera qu'il est possible de réaliser ces dispositifs dans le contexte d'instructions logicielles et/ou dans le contexte de circuits électroniques.

Selon un troisième aspect, l'invention concerne un réseau de communication. Ledit réseau de communications est caractérisé en ce qu'il comprend :

- au moins une entité réseau telle que décrite succinctement ci-dessus, et
- au moins un objet communicant mobile, équipé d'au moins une Antenne Prédictive et d'au moins une antenne principale.

Les avantages offerts par ce réseau de communication sont essentiellement les mêmes que ceux offerts par les procédés corrélatifs succinctement exposés ci-dessus.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé d'estimation de canal succinctement exposé ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :

- la figure 1 représente schématiquement un algorithme classique d'estimation de canal, et
- la figure 2 représente schématiquement une méthode d'interpolation selon l'invention.

On va décrire à présent un mode de réalisation de l'invention dans lequel on utilise l'algorithme décrit dans l'article de J. Björsell, M. Sternad et M. Grieger intitulé « Predictor Antennas in Action » (IEEE International Symposium on Personal, Indoor and Mobile Radio Communications, Montréal, octobre 2017). Cet algorithme s'applique au procédé « d'Antenne Prédictive » décrit succinctement ci-dessus, et réalise une interpolation et un filtrage du bruit sur des mesures effectuées sur la base de signaux apériodiques (les signaux de référence).

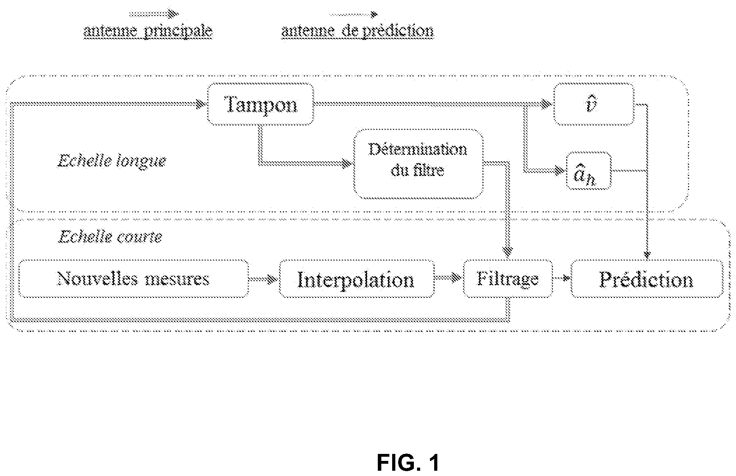

La description ci-dessous fera référence à la **figure 1,** qui est adaptée d'une figure de cet article.

On supposera ici pour simplifier que l'on utilise une unique Antenne Prédictive, ainsi qu'une unique antenne principale (pour les échanges de données utiles avec la station de base), mais cet algorithme est aisément généralisable au cas d'une pluralité d'antennes prédictives et/ou principales.

On va tout d'abord résumer les étapes principales de cet algorithme.

La valeur que prendra le canal scalaire complexe $h_m$ vu par l'antenne principale $\tau$ secondes plus tard est prédite en multipliant le canal $h_p$ précédemment estimé, et convenablement retardé, vu par l'Antenne Prédictive, par un coefficient

à valeurs complexes $a_h$ selon l'équation suivante :

$$\hat{h}_m(t + \tau) = a_h \hat{h}_p(t + \tau - \Delta t), \tag{1}$$

où $t$ est l'instant courant, $\hat{h}_p(t + \tau - \Delta t)$ est une estimation lissée de $h_p$ obtenue à partir de mesures bruitées effectuées avant l'instant $t$, et $\Delta t$ est le décalage temporel entre les passages de l'Antenne Prédictive et de l'antenne principale par la même position spatiale.

L'algorithme comprend deux parties interopérant l'une avec l'autre : une partie qui opère avec une échelle temporelle longue, dite « partie d'échelle longue », et une partie qui opère avec une échelle temporelle courte, dite « partie d'échelle courte ». La partie d'échelle courte génère une nouvelle prédiction à des intervalles temporels successifs dits « intervalles de prédiction », avec une période courte. La partie d'échelle longue génère des paramètres à des intervalles temporels successifs avec une période longue, multiple de la période courte.

La partie d'échelle longue estime le coefficient $a_h$ et la vitesse $v$ du véhicule à partir de mesures de canal, mises en mémoire tampon, de l'Antenne Prédictive et de l'antenne principale. Plus précisément, le coefficient $a_h$ est évalué à partir de la corrélation maximale entre les antennes, et la vitesse $v$ est évaluée à partir de la valeur du décalage temporel entre les antennes qui maximise la corrélation entre les antennes (la distance entre les antennes étant connue à l'avance). De plus, la partie d'échelle longue détermine les coefficients d'un filtre passe-bas à réponse impulsionnelle finie (« *Finite Impulse Response* », ou FIR en anglais) ; ce filtre FIR est appliqué dans la partie d'échelle courte pour supprimer des erreurs d'estimation de haute fréquence sur $h_m$ et $h_p$. Les valeurs de $a_h$, $v$ et des coefficients du filtre FIR sont utilisées par la partie d'échelle courte pendant l'intervalle de prédiction ultérieur, après quoi de nouveaux paramètres sont estimés par la partie d'échelle longue.

La partie d'échelle courte réalise une interpolation et un filtrage des canaux de toutes les antennes, et prédit ensuite le canal de l'antenne principale. En effet, une interpolation est nécessaire car on suppose que la série temporelle d'estimations de canal comprend des sous-séquences dans lesquelles au moins deux estimations de canal sont disponibles, mais avec des écarts temporels entre les sous-séquences. L'interpolation fournit une séquence dense et uniforme dans le temps d'échantillons auxquels on peut appliquer le dernier filtre FIR obtenu. Les estimations filtrées du canal de l'Antenne Prédictive sont alors insérées dans l'équation (1) pour prédire la valeur que prendra le canal principal $\tau$ secondes plus tard. Enfin, les mesures filtrées pour toutes les antennes sont copiées dans la mémoire tampon pour être utilisées lors de l'itération suivante de la partie d'échelle longue.

On notera, pour compléter ce résumé, que cet algorithme requiert une phase d'initiation (non représentée sur la figure 1), au cours de laquelle on met en œuvre une itération d'échelle longue pour générer les premières estimations sur la base de mesures non filtrées extraites de la mémoire tampon.

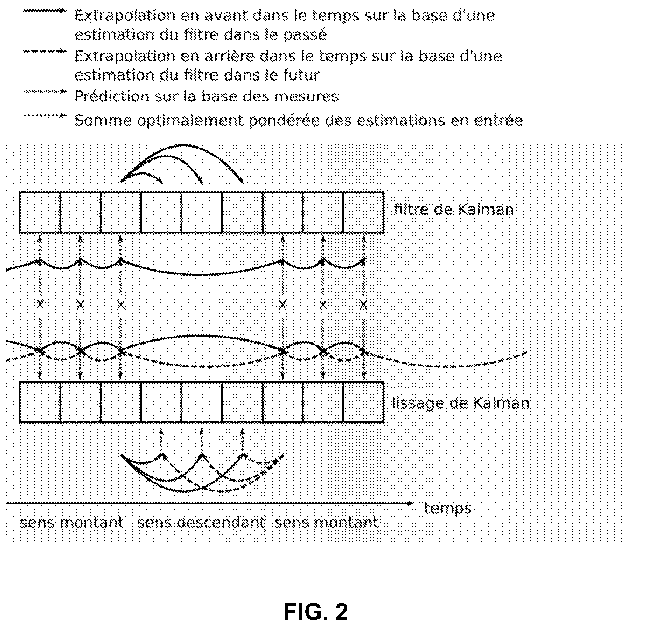

On va décrire à présent, en référence à la **figure 2,** une méthode d'interpolation mise en œuvre dans le présent mode de réalisation de l'invention.

Pour un écart temporel donné entre deux sous-séquences d'estimations de canal, on effectue d'abord une extrapolation sur la base des estimations de canal de la sous-séquence précédent l'écart, en avançant dans le temps. On effectue ensuite une seconde extrapolation sur la base des estimations de canal de la sous-séquence suivant l'écart, en reculant dans le temps. Enfin, on calcule une moyenne pondérée des estimations extrapolées en avant dans le temps et des estimations extrapolées en arrière dans le temps, pour obtenir des estimations de canal régulièrement espacées dans l'écart temporel.

Dans un système TDD, cadencé par des créneaux horaires de durées égales, on peut estimer les canaux de propagation relatifs aux créneaux horaires sur la voie montante (*uplink*) sur la base de mesures (indiquées par des « x » sur la figure 2). En utilisant la réciprocité de canal, on peut alors extrapoler les canaux de propagation relatifs aux créneaux horaires sur la voie descendante (*downlink*) sur la base des estimations de canal des créneaux horaires *uplink.*

Selon une variante, on effectue lesdites extrapolations au moyen d'un filtre de Kalman.

On rappelle à cet égard (cf. Wikipedia) qu'on appelle « filtre de Kalman » un filtre qui estime les états d'un système dynamique à partir d'une série de mesures incomplètes ou bruitées. Dans le cas de mesures successives, le filtre de Kalman est un estimateur récursif avec un pas temporel : cela signifie que, pour estimer l'état présent, seuls les résultats de mesures courantes et l'estimation de l'état précédent, effectuée au pas temporel précédent, sont nécessaires ; autrement dit, l'historique des mesures et des estimations n'est pas requis. Le filtre de Kalman fait appel à la dynamique du système considéré qui définit son évolution dans le temps : on obtient ainsi de meilleures données en éliminant l'effet du bruit. Ces données peuvent être calculées pour le passé (« lissage »), c'est-à-dire pour un pas temporel passé à partir de mesures courantes et d'estimations effectuées durant un pas temporel futur, à condition que ces mesures et ces estimations soient disponibles. Ces données peuvent aussi être calculées pour le futur (« prédiction »), c'est-à-dire pour un pas temporel futur, à partir de mesures courantes et d'estimations effectuées durant un pas temporel passé.

L'état du filtre est représenté par deux variables qui sont mises à jour à chaque itération du filtre, c'est-à-dire à chaque pas temporel :

- l'estimation de l'état courant ; et
- la matrice de covariance de l'erreur, qui mesure la précision de l'état estimé.

Le filtre de Kalman comprend deux phases distinctes : une phase de prédiction et une phase de mise à jour. La phase de prédiction utilise l'état estimé au pas temporel précédent, ou au pas temporel suivant, pour produire une estimation de l'état courant. Dans l'étape de mise à jour, on utilise les mesures courantes pour corriger l'état prédit, dans le but d'obtenir une estimation plus précise.

On peut montrer que, lorsque le bruit est Gaussien, le filtre de Kalman minimise l'erreur quadratique moyenne sur les grandeurs estimées ; c'est pourquoi le filtre de Kalman est dit « optimal ».

On notera que l'utilisation d'un filtre de Kalman pour réaliser une prédiction sur des estimations de canal est connue en soi (cf. par exemple l'article de S. Kashyap, C. Mollén, E. Björnson et E.G. Larsson intitulé « Performance Analysis of (TDD) Massive MIMO with Kalman Channel Prediction », IEEE International Conference on Acoustics, Speech, and Signal Processing, Nouvelle-Orléans, mars 2017).

Dans la présente variante de l'invention, l'extrapolation en avant dans le temps est effectuée au moyen d'un filtre de Kalman ; il s'agit donc d'un modèle de série temporelle autorégressive décrivant l'évolution du canal en avant dans le temps (on rappelle que dans une série autorégressive, l'estimation courante d'une grandeur dépend linéairement des estimations précédentes de cette même grandeur et d'un terme stochastique). L'extrapolation en arrière dans le temps est elle aussi effectuée au moyen d'un filtre de Kalman ; il s'agit donc d'un modèle de série temporelle autorégressive décrivant l'évolution du canal en arrière dans le temps. Finalement, on calcule la moyenne pondérée des deux extrapolations en effectuant une pondération d'erreur quadratique moyenne optimale, qui prend en compte les variances des erreurs dans les deux extrapolations.

Dans un système TDD, les créneaux horaires *uplink* et *downlink* constituent les pas temporels du filtre de Kalman, qu'il soit utilisé pour prédire (en avant dans le temps) ou pour lisser (à rebours dans le temps). Plus précisément, pour chaque créneau horaire *uplink,* le canal est estimé comme la somme pondérée optimale au sens MSE des deux termes suivants : le canal prédit par le filtre de Kalman sur la base de l'estimation au pas temporel précédent et de la mesure courante. On calcule alors une première estimée du canal du m-ième (où m $\geq$ 1) créneau horaire *downlink* comme le canal prédit par le filtre de Kalman au bout de m pas temporels sur la base de la dernière estimation de canal *uplink.*

Grâce à l'Antenne Prédictive, nous avons aussi accès à des mesures et des estimations dans le futur. Avec un lissage de Kalman, le canal de chaque créneau horaire *uplink* est estimé comme la somme pondérée optimale au sens MSE des deux termes suivants : la mesure de canal courante, et l'extrapolation d'un pas temporel en arrière par le filtre de Kalman sur la base du canal estimé au pas temporel ultérieur. Désignons par $N$ le nombre de créneaux horaires *downlink.* On calcule alors une deuxième estimée du canal du m-ième créneau horaire *downlink* comme le canal extrapolé en arrière par le filtre de Kalman au bout de $(N - m)$ pas temporels en arrière sur la base de la première estimation de canal *uplink* dans le futur.

Enfin, l'estimation finale du canal pour le *m*-ième créneau horaire *downlink* est obtenue en calculant la somme pondérée optimale au sens MSE de la première estimation et de la deuxième estimation du canal le *m*-ième créneau horaire *downlink.*

L'invention peut être mise en œuvre au sein d'entités, par exemple des stations de base, de réseaux de communication, au moyen de composants logiciels et/ou matériels.

Les composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre de l'un quelconque des procédés d'estimation de canal selon l'invention.

En effet, l'invention vise aussi un programme d'ordinateur téléchargeable depuis un réseau de communication comprenant des instructions pour l'exécution des étapes d'un procédé d'estimation de canal selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés d'estimation de canal selon l'invention.

**Revendications**

1. Procédé, mis en œuvre par ordinateur, d'estimation de canal de communication radio, comprenant, pour au moins un écart temporel observé entre deux sous-séquences de mesures de canal de communication radio, ou d'estimations de canal de communication radio, constituées de scalaires ou de vecteurs complexes, les étapes suivantes :

   - on effectue une première extrapolation sur la base de mesures de canal de communication radio ou d'estimations de canal de communication radio de la sous-séquence précédent ledit écart temporel, en avançant dans le temps,
   - on effectue une seconde extrapolation sur la base de mesures de canal ou d'estimations de canal de communication radio de la sous-séquence suivant l'écart temporel, en reculant dans le temps, et
   - on calcule une moyenne pondérée desdites mesures ou estimations de canal de communication radio extrapolées en avant dans le temps et desdites mesures ou estimations de canal de communication radio extrapolées en arrière dans le temps, pour obtenir des mesures de canal de communication radio ou des estimations de canal de communication radio régulièrement espacées dans l'écart temporel.

2. Procédé d'estimation de canal selon la revendication 1 , **caractérisé en ce que** ladite première extrapolation, ladite seconde extrapolation et ladite moyenne pondérée sont effectuées au moyen d'un lissage de Kalman.

3. Procédé d'estimation de canal selon la revendication 1 ou la revendication 2, **caractérisé en ce qu'**il est mis en oeuvre au cours d'une communication entre, d'une part, une entité réseau, et d'autre part un objet communicant mobile comprenant au moins une Antenne Prédictive et au moins une antenne principale.

4. Entité réseau pour l'estimation de canal, comprenant, pour un écart temporel donné entre deux sous-séquences de mesures de canal, ou d'estimations de canal de communication radio, constituées de scalaires ou de vecteurs complexes, des moyens pour :

   - effectuer une première extrapolation sur la base de mesures de canal de communication radio ou d'estimations de canal de communication radio de la sous-séquence précédent ledit écart temporel, en avançant dans le temps,
   - effectuer une seconde extrapolation sur la base de mesures de canal de communication radio ou d'estimations de canal de communication radio de la sous-séquence suivant l'écart temporel, en reculant dans le temps, et
   - calculer une moyenne pondérée desdites mesures ou estimations de communication radio extrapolées en avant dans le temps et desdites mesures ou estimations extrapolées en arrière dans le temps, pour obtenir des mesures de canal de communication radio ou des estimations de canal de communication radio régulièrement espacées dans l'écart temporel.

5. Entité réseau selon la revendication 4, **caractérisée en ce qu'**elle comprend en outre des moyens pour effectuer ladite première extrapolation, ladite seconde extrapolation et ladite moyenne pondérée au moyen d'un lissage de Kalman.

6. Entité réseau selon la revendication 4 ou la revendication 5, **caractérisée en ce qu'**elle est hébergée dans une station de base d'un réseau de communication cellulaire.

7. Entité réseau selon l'une des revendications 4 à 6, **caractérisé en ce que** effectuer la première et/ou la seconde estimation de canal et calculer ladite moyenne pondérée est mis en œuvre au cours d'une communication entre, d'une part, ladite entité réseau, et d'autre part un objet communicant mobile comprenant au moins une antenne prédictive et au moins une antenne principale.

8. Réseau de communication, **caractérisé en ce qu'**il comprend :

- au moins une entité réseau selon l'une quelconque des revendications 4 à 6, et
- au moins un objet communicant mobile équipé d'au moins une Antenne Prédictive et d'au moins une antenne principale.

9. Moyen de stockage de données inamovible, ou partiellement ou totalement amovible, comportant des instructions de code de programme informatique pour l'exécution des étapes d'un procédé d'estimation de canal de communication radio selon l'une quelconque des revendications 1 à 3.

10. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé d'estimation de canal de communication radio selon l'une quelconque des revendications 1 à 3, lorsqu'il est exécuté sur un ordinateur.

**Patentansprüche**

1. Verfahren zur Schätzung eines Funkkommunikationskanals, das durch einen Computer umgesetzt wird und für mindestens einen zeitlichen Abstand, der zwischen zwei Messteilsequenzen des Funkkommunikationskanals beobachtet wird, oder zu Schätzungen eines Funkkommunikationskanals, die aus Skalaren oder komplexen Vektoren bestehen, die folgenden Schritte:

   - Durchführen einer ersten Extrapolierung auf Grundlage von Messungen des Funkkommunikationskanals oder Schätzungen des Funkkommunikationskanals der Teilsequenz, die dem zeitlichen Abstand vorausgeht, durch Fortschreiten in der Zeit,
   - Durchführen einer zweiten Extrapolierung auf Grundlage von Kanalmessungen oder Funkkommunikationskanalschätzungen der Teilsequenz, die dem zeitlichen Abstand folgt, durch Zurückgehen in der Zeit, und
   - Berechnen eines gewichteten Mittels der Funkkommunikationskanalmessungen oder -schätzungen, die zeitlich vorwärts extrapoliert wurden, und der Funkkommunikationskanalmessungen oder -schätzungen, die zeitlich rückwärts extrapoliert wurden, um Funkkommunikationskanalmessungen oder Funkkommunikationskanalschätzungen zu erhalten, die in zeitlichem Abstand regelmäßig beabstandet sind.

2. Verfahren zur Kanalschätzung nach Anspruch 1, **dadurch gekennzeichnet, dass** die erste Extrapolierung, die zweite Extrapolierung und das gewichtete Mittel mittels einer Kalman-Glättung durchgeführt werden.

3. Verfahren zur Kanalschätzung nach Anspruch 1 oder Anspruch 2, **dadurch gekennzeichnet, dass** es im Verlauf einer Kommunikaitons zwischen einer Netzeinheit einerseits und einem mobilen Kommunikationsobjekt umgesetzt wird, das mindestens eine prädiktive Antenne und mindestens eine Hauptantenne umfasst.

4. Netzeinheit zur Kanalschätzung, die für einen gegebenen zeitlichen Abstand zwischen zwei Teilsequenzen von Kanalmessungen oder Funkkommunikationskanalschätzungen, die aus komplexen Skalaren oder Vektoren bestehen, Mittel für Folgendes umfasst:

   - Durchführen einer ersten Extrapolierung auf Grundlage von Messungen des Funkkommunikationskanals oder Schätzungen des Funkkommunikationskanals der Teilsequenz, die dem zeitlichen Abstand vorausgeht, durch zeitliches Vorwärtsgehen,
   - Durchführen einer zweiten Extrapolierung auf Grundlage von Kanalmessungen oder Funkkommunikationskanalschätzungen der Teilsequenz, die dem zeitlichen Abstand folgt, durch zeitliches Zurückgehen, und
   - Berechnen eines gewichteten Mittels der Funkkommunikationskanalmessungen oder -schätzungen, die zeitlich vorwärts extrapoliert wurden, und der Messungen oder Schätzungen, die zeitlich rückwärts extrapoliert wurden, um Funkkommunikationskanalmessungen oder Funkkommunikationskanalschätzungen zu erhalten, die in zeitlichem Abstand regelmäßig beabstandet sind.

5. Netzeinheit nach Anspruch 4, **dadurch gekennzeichnet, dass** sie außerdem Mittel zur Durchführung der ersten Extrapolierung, der zweiten Extrapolierung und der gewichteten Mittelwertbildung mittels einer Kalman-Glättung umfasst.

6. Netzeinheit nach Anspruch 4 oder Anspruch 5, **dadurch gekennzeichnet, dass** sie in einer Basisstation eines zellulären Kommunikationsnetzes untergebracht ist.

7. Netzeinheit nach einem der Ansprüche 4 bis 6, **dadurch gekennzeichnet, dass** Durchführen der ersten und/oder der zweiten Kanalschätzung und Berechnen des gewichteten Mittelwerts im Verlauf einer Kommunikation zwischen der Netzeinheit einerseits und einem mobilen Kommunikationsobjekt, das mindestens eine prädiktive Antenne und mindestens eine Hauptantenne umfasst, durchgeführt wird.

8. Kommunikationsnetz, **dadurch gekennzeichnet, dass** es umfasst:

   - mindestens eine Netzeinheit nach einem der Ansprüche 4 bis 6 und
   - mindestens eine mobile Kommunikationseinheit, die mindestens mit einer prädiktiven Antenne und mindestens einer Hauptantenne ausgestattet ist.

9. Nicht entnehmbares oder teilweise oder vollständig entnehmbares Datenspeichermedium, das Computerprogrammcodeanweisungen zum Ausführen der Schritte eines Verfahrens zur Funkkommunikationskanalschätzung nach einem der Ansprüche 1 bis 3 beinhaltet.

10. Computerprogramm, das über ein Kommunikationsnetz herunterladbar ist und/oder auf einem computerlesbaren Medium gespeichert ist und/oder von einem Mikroprozessor ausführbar ist, **dadurch gekennzeichnet, dass** es Anweisungen umfasst, die bei seiner Ausführung auf einem Computer die Schritte eines Verfahrens Funkkommunikationskanalschätzung nach einem der Ansprüche 1 bis 3 ausführen.

## Claims

1. Computer-implemented radio communication channel estimation method comprising, for at least one time gap observed between two sub-sequences of radio communication channel measurements or of radio communication channel estimates, consisting of complex vectors or scalars, the following steps:

   - a first extrapolation is performed on the basis of radio communication channel measurements or radio communication channel estimates of the sub-sequence that precedes said time gap, going forward in time,
   - a second extrapolation is performed on the basis of radio communication channel measurements or radio communication channel estimates of the sub-sequence that follows the time gap, going backward in time, and
   - a weighted mean of said radio communication channel measurements or estimates extrapolated forward in time and of said radio communication channel measurements or estimates extrapolated backward in time is calculated so as to obtain radio communication channel measurements or radio communication channel estimates that are regularly spaced out over the time gap.

2. Channel estimation method according to Claim 1, **characterized in that** said first extrapolation and said second extrapolation are performed, and said weighted mean is taken, by means of Kalman smoothing.

3. Channel estimation method according to Claim 1 or Claim 2, **characterized in that** it is implemented during a communication between a network entity and a mobile communicating object comprising at least one Predictor Antenna and at least one main antenna.

4. Network entity for channel estimation, comprising, for a given time gap between two sub-sequences of radio communication channel measurements or of radio communication channel estimates, consisting of complex vectors or scalars, means for:

   - performing a first extrapolation on the basis of radio communication channel measurements or radio communication channel estimates of the sub-sequence that precedes said time gap, going forward in time,
   - performing a second extrapolation on the basis of radio communication channel measurements or radio communication channel estimates of the sub-sequence that follows the time gap, going backward in time, and
   - calculating a weighted mean of said radio communication measurements or estimates extrapolated forward in time and of said measurements or estimates extrapolated backward in time so as to obtain radio communication channel measurements or radio communication channel estimates that are regularly spaced out over the time gap.

5. Network entity according to Claim 4, **characterized in that** it further comprises means for performing said first extrapolation and said second extrapolation, and for taking said weighted mean, by means of Kalman smoothing.

6. Network entity according to Claim 4 or Claim 5, **characterized in that** it is accommodated in a base station of a cellular communication network.

7. Network entity according to any one of Claims 4 to 6, **characterized in that** performance of the first and/or the second channel estimation and calculation of said weighted mean are implemented during a communication between, on the one hand, said network entity, and on the other hand, a mobile communicating object comprising at least one Predictor Antenna and at least one main antenna.

8. Communication network, **characterized in that** it comprises:

   - at least one network entity according to any one of Claims 4 to 6, and
   - at least one mobile communicating object provided with at least one Predictor Antenna and at least one main antenna.

9. Irremovable, or partially or fully removable data storage means that includes computer program code instructions for carrying out the steps of a radio communication channel estimation method according to any one of Claims 1 to 3.

10. Computer program that can be downloaded from a communication network and/or is stored on a computer-readable medium and/or is able to be executed by a microprocessor, **characterized in that** it comprises instructions for carrying out the steps of a radio communication channel estimation method according to any one of Claims 1 to 3 when it is executed on a computer.

FIG. 1

FIG. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- The Potential of Moving Relays - A performance Analysis. **Y. SUI** ; **A. PAPADOGIANNIS** ; **T. SVENSSON**. IEEE Vehicular Technology Conference. mai 2012
- **D. ARONSSON** ; **A. BELÉN MARTINEZ**. Using predictor antennas for long-range prediction of fast fading for moving relays. *IEEE Wireless Communications and Networking Conference*, April 2012
- **BJORSELL et al.** Predictor antennas in action. *2017 IEEE 28th Annual International Symposium on Personnal, Indoor, and Mobile Radio Communications (PIMRC)*, 08 October 2017

- **J. BJÖRSELL** ; **M. STERNAD** ; **M. GRIEGER**. Predictor Antennas in Action. *IEEE International Symposium on Personal, Indoor and Mobile Radio Communications*, October 2017
- **S. KASHYAP** ; **C. MOLLÉN** ; **E. BJÖRNSON** ; **E.G. LARSSON**. Performance Analysis of (TDD) Massive MIMO with Kalman Channel Prediction. *IEEE International Conference on Acoustics, Speech, and Signal Processing*, March 2017